# EUROPÄISCHE PATENTSCHRIFT

(11) **EP 0 445 842 B1**
(45) Veröffentlichungstag und Bekanntmachung des Hinweises auf die Patenterteilung: **10.08.1994**
(21) Anmeldenummer: 91105419.5
(22) Anmeldetag: 15.05.1987
(51) Int. Cl.: A01C 17/00

(54) **Schleuderdüngerstreuer mit Vorratsbehälter**
Fertilizer broadcaster with hopper
Distributeur d'engrais centrifuge avec trémie

(30) Priorität: 23.05.1986 DE 3617302
(43) Veröffentlichungstag der Anmeldung: 11.09.1991
(62) Teilanmeldung aus: 87107098.3
(73) Patentinhaber: Amazonen-Werke H. Dreyer GmbH & Co. KG, D-49205 Hasbergen (DE)
(72) Erfinder: Dreyer, Heinz, Dipl.-Ing. Dr., W-4507 Hasbergen (DE)

(56) Entgegenhaltungen:
- EP-A- 0 088 480
- EP-A- 0 127 922

## Beschreibung

Die Erfindung betrifft einen Schleuderstreuer mit Vorratsbehälter gemäß des Oberbegriffes des Anspruches 1.

Ein derartig ausgebildeter Schleuderstreuer ist beispielsweise durch die DE-OS 33 37 762 bekannt. Dieser Schleuderstreuer ist als Anbauschleuderstreuer ausgebildet, der die Düngemittelpartikel mit Hilfe angetriebener Schleuderscheiben über einen Bereich abschleudert, der die Baubreite des Schleuderstreuers wesentlich übersteigt. Die Düngemittelpartikel werden von den Schleuderscheiben in lückenlos seitlich aneinander anschließende und überlappende Streufächer über die zu bestreuende Bodenoberfläche in einem gleichmäßigen Streubild verteilt, wobei die aneinander anschließenden und überlappenden einzelnen Streufächer jeweils von einer einzelnen Schleuderscheibe erzeugt werden. Mit einem derartig ausgebildeten Schleuderstreuer lassen sich die auszubringenden Düngemittel über eine sehr große effektive Streubreite ausbringen. Eine optimale und gleichmäßige Ausbringung der Düngemittel für die jeweils erforderlichen Einsatzverhältnisse wird durch die Erzeugung einzelner, aneinander anschließender und sich überlappender, jeweils von einer einzelnen Schleuderscheibe erzeugten Streufächer gewährleistet. Hierdurch besteht die Möglichkeit, daß von dem Schleuderstreuer innerhalb der Streubreite aus den einzelnen Streufächern erzeugte Streubild so zu einem gesamten zusammenzusetzen, wie es die jeweiligen Einsatzverhältnisse und Bedingungen erfordern. Die effektive Streubreite läßt sich somit also in Stufen verkleinern und vergrößern, ohne daß es zu einer Änderung der Streustärke bei dem, durch die anderen Streufächer gebildeten Streubild kommt.

Mit Hilfe der vor den Auslauföffnungen angeordneten Verschlußelemente läßt sich die Düngemittelzufuhr zu den einzelnen Schleuderscheiben während des Einsatzes unterbrechen bzw. wieder herstellen, so daß die effektive Streubreite des Düngerstreuers während des Streuvorganges stufenweise veränderbar ist. Eine Veränderung der Ausbringmenge während des Einsatzes des Schleuderstreuers ist aber nicht berücksichtigt, was als nachteilig anzusehen ist. Somit ist es dem Landwirt nicht möglich, den jeweiligen Anforderungen der zu bestreuenden Fläche hinsichtlich einer optimalen Nährstoffversorgung anzupassen.

Die EP- 01 27 922 A2 zeigt einen Schleuderdüngerstreuer mit zwei Schleuderscheiben. Die Scheiben sind mit unterschiedlichen Drehzahlen antreibbar.

Der Erfindung liegt daher die Aufgabe zugrunde, einen Schleuderstreuer zu schaffen, der in einfach bedienbarer Weise, auch bei großen Arbeitsbreiten, so einstellbar ist, daß jeweils der auszubringende Dünger entsprechend der Nährstoffversorgung der zu bestreuenden Flächen auszubringen ist.

Diese Aufgabe wird erfindungsgemäß durch den kennzeichnenden Teil des Anspruches 1 gelöst. Das Antreiben der Schleuderscheiben mit voneinander unterschiedlichen Drehzahlen vergrößert die Möglichkeiten zur Anpassung an die jeweiligen Einsatzverhältnisse. Die unterschiedlichen Drehzahlen lassen sich beispielsweise dadurch erreichen, daß im Antrieb für die Schleuderscheiben ein unterschiedliche Drehzahlen ermöglichendes Getriebe angeordnet ist, wobei weiterhin für jede Schleuderscheibe ein eigenes Drehzahlen veränderbares Getriebe vorgesehen ist. Des weiteren ist es möglich, daß das Eingangsgetriebe zwei Anschlußwellen mit unterschiedlichen Ubersetzungen aufweist, so daß die Schleuderscheiben entsprechend des gewählten Übersetzungsverhältnisses antreibbar sind.

Weiterhin ist in erfindungsgemäßer Weise vorgesehen, daß die jeder Schleuderscheibe zugeführte Ausbringmenge gemeinsam oder unabhängig voneinander einstellbar ist. Infolge dieser Maßnahme läßt sich die jeder einzelnen Schleuderscheibe zugeführte Düngermittelmenge gleichzeitig und um denselben Betrag verändern, wobei die Düngerausbringmenge innerhalb der effektiven Streubreite des Schleuderstreuers gleich ist, d.h., die pro Flächeneinheit ausgebrachte Düngermittelmenge ist innerhalb der effektiven Streubreite gleich. Die unabhängige Einstellung der den Schleuderscheiben zugeführten Düngerausbringmenge gestattet eine optimale Anpassung der jeweiligen Düngerausbringmenge entsprechend des erforderlichen Nährstoffbedarfes der zu bestreuenden Fläche, wobei die Einstellung der zur optimalen Nährstoffversorgung der zu bestreuenden Fläche erforderlichen Düngemittelmenge manuell oder automatisch anhand eines entsprechenden Nährstoffprofiles erfolgen kann.

Die Anordnung von vorzugsweise vier Dosierorganen im unteren Bereich des Vorratsbehälters sieht erfindungsgemäß vor, daß die Dosierorgane als Dosierräder vorzugsweise Nockenräder ausgebildet sind, und daß jeder Schleuderscheibe zumindest ein Dosierrad zugeordnet ist. Hierbei ist vorgesehen, daß den Dosierorganen regelbare Antriebsorgane, vorzugsweise elektrische Motore, zugeordnet sind, wobei mindestens zwei Elektromotore, vorzugsweise vier Elektromotore vorgesehen sind, so daß dem Dosierorgan jeder Schleuderscheibe ein eigener elektrischer Antriebsmotor zugeordnet ist. Infolge dieser Maßnahmen läßt sich jedes Dosierorgan von einem separaten Antriebsmotor getrennt und unabhängig von den Antriebsvorrichtungen der anderen Dosierorgane antreiben. Hierdurch entsteht die Möglichkeit, die von den nebeneinander angeordneten und sich überlappenden Streubereichen der einzelnen Schleuderscheiben gebildete effektive Streubreite in vier Stufen zu verändern. Diese Art des Antriebes der Dosierorgane ermöglicht gleichzeitig das Einstellen unterschiedlicher Ausbringmengen der einzelnen Dosierorgane. Somit lassen sich den einzelnen Schleuderscheiben unterschiedliche Düngermittelmengen zuführen, wodurch die Möglichkeit geschaffen wird, sich auch innerhalb der effektiven Streubreite eines Düngerstreuers dem notwendigen Nährstoffbedarf der zu bestreuenden Fläche anzupassen, so daß eine optimale Nährstoffversorgung des bestreuten Ackers gewährleistet ist.

Das Verändern der effektiven Streubreite bzw. die Veränderung der Ausbringmenge innerhalb der jeweiligen effektiven Streubreite des Schleuderstreuers läßt sich auch durch die Ausbildung der Dosierorgane als Auslauföffnungen herbeiführen. Hierbei ist vorgesehen, daß die Dosierorgane als Auslauföffnungen, deren Öffnungsweiten mittels Schieber jeweils einstellbar sind, ausgebildet sind, wobei jeweils maximal zwei Schiebern ein elektrischer Stellmotor zugeordnet ist. Durch die Betätigung von jeweils maximal zwei Schiebern über einen elektrischen Stellmotor wird die effektive Streubreite bzw. die Veränderung der Ausbringmenge innerhalb der effektiven Streubreite in größeren Abschnitten verändert.

Die erfindungsgemäße Ausführungform bei dem jedem Schieber, der einer Schleuderscheibe zugeordnet ist, jeweils ein eigener elektrischer Stellmotor, der mit der elektronischen Einstellvorrichtung verbunden ist, zugeordnet ist, läßt sich die effektive Streubreite in besonders vorteilhafter Weise exakt den jeweiligen Einsatzverhältnissen entsprechend anpassen. Weiterhin ist die optimale Anpassung der Düngerausbringmenge hinsichtlich des erforderlichen Nährstoffbedarfes innerhalb der jeweiligen effektiven Streubreite des Düngerstreuers möglich, wodurch eine genaue, exakt auf den jeweiligen Nährstoffbedarf der zu bestreuenden Oberfläche abgestimmte Düngermittelgabe gewährleistet ist.

Weiterhin kann vorgesehen sein, daß die Dosierorgane als Auslauföffnungen, deren Öffnungsweite mittels Schieber jeweils einstellbar ist, ausgebildet sind, wobei die elektronische Einstellvorrichtung mit dem Schieber verbunden ist. Hierbei ist vorgesehen, daß die elektronische Einstellvorrichtung, in die die für die jeweilige Schieberstellung entsprechende Düngermittelmenge eingespeichert ist, die jeweilige Schieberstellung erfaßt. Infolge dieser Maßnahme ist es auch hier auf besonders einfache Weise möglich, die Ausbringmenge dem jeweils erforderlichen Nährstoffbedarf der zu bestreuenden Fläche anzupassen. Durch Veränderung des vorgegebenen Sollwertes übernimmt die elektronische Einstellvorrichtung automatisch die Verstellung der Öffnungsweite der Auslauföffnungen durch Verändern der jeweiligen Schieberstellung. Das Verstellen der auszubringenden Düngermittelmenge entsprechend des Nährstoffbedarfes läßt sich also auf besonders einfache Weise durchführen, so daß eine genaue und auf die jeweilige Nährstoffversorgung abgestimmte Düngemittelgabe erfolgt.

Weiterhin kann vorgesehen sein, daß im Bereich der Dosierorgane Sensoren zur Ermittlung der momentanen tatsächlichen Ausbringmenge angeordnet sind und daß diese Sensoren mit der elektronischen Einstellvorrichtung verbunden sind. Hierdurch ist es möglich, die Ausbringmenge besonders exakt zu erfassen. Durch die Anordnung der Sensoren innerhalb des von den Auslauföffnungen in Richtung auf die Schleuderscheiben rieselnden Materialstromes werden auch die schüttgutspezifischen Einflußfaktoren wie beispielsweise Fließverhalten des Düngers und das durch Witterungseinflüsse beeinflußbare Schüttgutverhalten berücksichtigt.

Bei der Anordnung von vorzugsweise vier Dosierorganen im unteren Bereich des Vorratsbehälters ist vorgesehen, daß die einander jeweils benachbarten Schleuderscheiben jeweils gegenläufig rotierend angetrieben werden. Hierbei ist vorgesehen, daß sich die Streubereiche der vier Schleuderscheiben zumindest annähernd insgesamt derart überdecken, so daß sich eine zumindest vierfache Überlappung ergibt. Infolge der mit unterschiedlichem Drehsinn angetriebenen Schleuderscheiben und der vierfachen Überlappung der einzelnen Streubereiche entsteht ein Streubild mit besonders großer Streustärkengleichmäßigkeit über die gesamte effektive Streubreite des Düngerstreuers. Evtl. Streuungenauigkeiten hervorgerufen durch düngerspezifische Eigenschaften innerhalb eines jeden, von einer einzelnen Schleuderscheibe erzeugten Streufächers werden hierdurch in besonders vorteilhafter Weise ausgeglichen, so daß sich ein Streubild gleichmäßiger Streustärke über die effektive Streubreite des Düngerstreuers ergibt.

In einer weiteren Ausführungsform ist vorgesehen, daß die Streubereiche der beiden inneren Schleuderscheiben sich jeweils zumindest nahezu vollständig überdecken, und daß die Streubereiche der beiden äußeren Schleuderscheiben sich jeweils zumindest nahezu vollständig überdecken. Hierdurch entsteht ebenfalls ein Streubild gleichmäßiger Streustärke über die gesamte effektive Streubreite des Schleuderstreuers, wobei diese gleichmäßige Streustärke auch bei einem Reduzieren der effektiven Streubreite beibehalten wird. Bei Reduzieren der effektiven Streubreite durch Unterbrechen der Düngerzufuhr zu den jeweils äußeren Schleuderscheiben und gleichzeitiger Erhöhung der Düngemittelzufuhr zu den jeweils inneren Schleuderscheiben läßt sich so eine Anpassung an die jeweilig vorgegebene Arbeitsbreite erreichen, wobei die gewünschte Ausbringmenge pro Flächeneinheit genau eingehalten wird.

Weiterhin ist vorgesehen, daß sich die Streubereiche der jeweils auf der einen Seite der Mittellinie des Vorratsbehälters angeordneten Schleuderscheiben zumindest nahezu vollständig überdecken. Infolge dieser Maßnahme wird ebenfalls ein Streubild gleichmäßiger Streustärke über die effektive Streubreite des Düngerstreuers geschaffen, wobei es auch möglich ist, die auszubringende Düngermittelmenge entsprechend des erforderlichen Nährstoffbedarfes der zu bestreuenden Oberfläche zu verändern.

Desweiteren kann vorgesehen sein, daß die Streubereiche der einzelnen Schleuderscheiben sich nur in ihren Randbereichen jeweils bzw. bis etwa über die Hälfte ihres Streubereiches überdecken. Hierdurch läßt sich in besonders einfacher Weise eine Anpassung der effektiven Streubreite an jeweils vorgegebene Abmessungen der zu bestreuenden Fläche erreichen. Beim Reduzieren bzw. Vergrößern der Arbeitsbreite ist eine Veränderung der Ausbringmenge zur Einhaltung der gewünschten Ausbringmenge pro Flächeneinheit nicht erforderlich, da sich die Streubereiche der einzelnen Schleuderscheiben nur in den Randbereichen bzw. bis etwa über die Hälfte überdecken.

Die Erfindung berücksichtigt weiterhin die Anordnung der Wurfelemente, wobei die Wurfelemente der einander benachbarten Schleuderscheibe jeweils winkelversetzt zueinander angeordnet sind. Infolge dieser Maßnahmen werden die Düngemittelpartikel derart abgeschleudert, daß die von den Wurfelementen auf jeweils bestimmten Flugbahnen abgeschleuderten Düngemittelpartikel nicht aufeinandertreffen, was zu einer gegenseitigen Ablenkung der Düngemittelpartikel und somit zum Erzeugen unsymmetrischer Streufächer führen würde. Die winkelversetzte Anordnung der Wurfelemente benachbarter schleuderscheiben gewährleistet das Entstehen einzelner Streufächer in gewünschter Weise.

In einer weiteren Ausführungsform ist vorgesehen, daß die beiden inneren Schleuderscheiben in entgegengesetzter Drehrichtung angetrieben werden, so daß in Fahrtrichtung gesehen die Schleuderscheiben auf der Vorderseite auseinanderdrehen, und daß die beiden äußeren Schleuderscheiben jeweils in entgegengesetzter Drehrichtung in bezug auf die jeweils benachbarte innere Schleuderscheibe angetrieben werden. Hierdurch ergibt sich eine weitere Antriebsmöglichkeit für die Schleuderscheiben, wobei sich die effektive Streubreite bzw. die Ausbringmenge entsprechend der von den einzelnen Schleuderscheiben erzeugten Streufächern verändern läßt.

Eine andere Ausführungsform sieht vor, daß die einander jeweils benachbarten Schleuderscheiben jeweils gegenläufig rotierend angetrieben werden, und daß die jeweils der inneren Schleuderscheibe benachbarte Schleuderscheibe mit gleichem Drehsinn wie diese benachbarte innere Schleuderscheibe angetrieben wird. Hier wird eine weitere Antriebsmöglichkeit für die Schleuderscheiben aufgezeigt, wobei eine Veränderung der effektiven Streubreite bzw. der Ausbringmenge durch Unterbrechung der den jeweiligen Schleuderscheiben zugeführten Düngemittelpartikel bzw. durch Veränderung der den jeweiligen Schleuderscheiben zugeführten Düngermenge möglich ist.

Weitere Einzelheiten sind der Beispielsbeschreibung sowie den Zeichnungen zu entnehmen. Hierbei zeigen
- Fig. 1: den erfindungsgemäß ausgebildeten und an einen Schlepper angebauten Schleuderstreuer in der Seitenansicht,
- Fig. 2: den erfindungsgemäß ausgebildeten Schleuderstreuer, dessen Dosierorgane als in unterschiedliche Öffnungsweiten mittels eines Schiebers einstellbare Auslauföffnungen ausgebildet sind in der Ansicht von hinten,
- Fig. 3: den Schleuderstreuer gemäß Fig. 2 in vergrößertem Maßstab und in der Draufsicht,
- Fig. 4: einen weiteren, in erfindungsgemäßer Weise ausgerüsteten Schleuderstreuer, wobei die Dosierorgane als Dosierräder ausgebildet sind,
- Fig. 5: eine andere erfindungsgemäße Ausführungsform des Schleuderstreuers, wobei die Dosierorgane als Dosierräder ausgebildet sind in der Ansicht von hinten,
- Fig. 6: eine in erfindungsgemäßer Weise ausgerüsteten Schleuderstreuer mit vier als Dosierräder ausgerüsteten Dosierorganen,
- Fig. 7: eine andere Ausführungsform des in erfindungsgemäßer Weise ausgebildeten Vierscheibenstreuers, wobei die Dosierorgane als in unterschiedliche Öffnungsweiten einstellbare Auslauföffnungen ausgebildet sind,

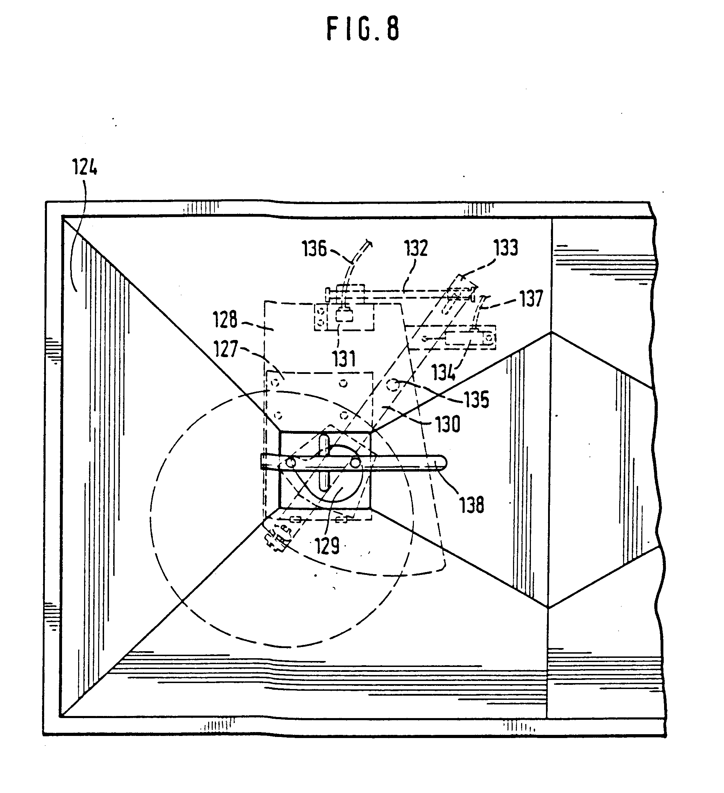

- Fig. 8: den Schleuderstreuer gemäß Fig. 7 in Teilansicht in vergrößertem Maßstab und in der Draufsicht,
- Fig. 9: eine Teilansicht der unterhalb des Vorratsbehälters in seinem unteren Bereich angeordneten und rotierend angetrieben Schleuderscheiben,
- Fig. 10: eine andere Bauweise der unterhalb des Vorratsbehälters in seinem unteren Bereich angeordneten, rotierend angetrieben Schleuderscheiben in der Ansicht von hinten,
- Fig. 11: die in schematischer Darstellung wiedergegebene Anordnung der rotierend angetriebenen Schleuderscheiben und der von diesen Schleuderscheiben erzeugten Streufächer,
- Fig. 12: eine weitere schematische Darstellung der Anordnungsweise der rotierend angetriebenen Schleuderscheiben und den von diesen Schleuderscheiben erzeugten Streufächern,
- Fig. 13: eine weitere Möglichkeit der Streuscheibenanordnung mit den von diesen Streuscheiben erzeugten Streufächern in schematischer Darstellung,
- Fig. 14: eine weitere Möglichkeit der Anordnung der Schleuderscheiben mit den von diesen Schleuderscheiben erzeugten Streufächern ebenfalls in Prinzipdarstellung und
- Fig. 15: eine weitere Möglichkeit der Anordnung der Schleuderscheiben mit den von diesen Schleuderscheiben erzeugten Streufächern ebenfalls in Prinzipdarstellung.

Der als Anbauschleuderstreuer ausgebildete Schleuderstreuer 1 weist den Rahmen 2 auf, der auf seiner in Fahrtrichtung 3 gesehen vorderen Seite mit den Dreipunktkupplungselementen 4 zum Anbau an den Schlepper 5 ausgestattet ist. Weiterhin ist an dem Rahmen 2 der Vorratsbehälter 6 befestigt, der zwei durch das dachförmige Mittelteil 7 getrennte trichterförmige Behälterteile 8 aufweist. Im unteren Bereich der trichterförmigen Behälterteile 8 sind die Einstellorgane 9 der Dosierorgane 10 angeordnet und mit der elektronische Einstellvorrichtung 11 verbunden. Die elektronsichen Einstellvorrichtung 11 liefert einen für die momentane Ausbringmenge charakteristischen Wert. Dieser erfaßte Wert wird an eine auf dem Schlepper angeordnete, mit Tasten versehene Eingabeeinheit 12 übermittelt. Diese Eingabeeinheit 12 ist als Mikroprozessor 13 ausgebildet und über das Kabel 14 mit der elektronischen Einstellvorrichtung 11 gekoppelt. Der für die momentane Ausbringmenge von der elektronischen Einstellvorrichtung erfaßte charakterischte Wert wird mit dem in der Eingabe und Bedienungseinheit 12 vorgebenen und eingespeichertem Sollwert automatisch verglichen, so daß eine Verstellung der Einstellorgane 9 beim Abweichen des Istwertes vom vorgegebenen Sollwert erfolgt, so daß die jeweilis gewünschte Ausbringmenge immer konstantgehalten wird. Unterhalb der Dosierorgane 10 sind die jeweils um eine aufrechte Achse 15 antreibbaren Schleuderscheiben 16 angeordnet. Die Schleuderscheiben 16 sind jeweils mit den Wurfelementen 17 bestückt und werden über die Gelenkwelle 18 von der Zapfwelle des Schleppers 5 angetrieben. Die sich im Vorratsbehälter 6 befindlichen Düngemittel werden mit Hilfe der Einstellorgane 9 der Dosierorgane 10 den Schleuderscheiben 16 in genau einstellbaren Mengen zugeführt. Die den Schleuderscheiben 16 zugeführten Düngemittelpartikel werden von den Wurfelementen 17 erfaßt und über einen bestimmten Streubereich abgeschleudert, wobei die einzelnen, nebeneinander liegenden einander überlappenden Streusektoren der einzelnen Streuscheiben 16 zu einem gesamten Streubild zusammengesetzt werden. Die Regelung der Ausbringmenge des Schleuderstreuers 1 wird in Abhängigkeit der Fahrgeschwindigkeit des den Schleuderstreuer 1 tragen- den Schleppers 5 durchgeführt. Die Ermittelung der Fahrgeschwindigkeit erfolgt mit Hilfe eines Fahrgeschwindigkeitssensors 19, der an einem nicht angetriebenen Rad, beispielsweise dem Vorderrad 20 des Schleppers 5 angeordnet ist. Dieser Fahrgeschwindigkeitssensor 19 liefert der Fahrgeschwindigkeit entsprechende charakteristische Werte, die an die Eingabe und Bedienungseinheit 12 weitergegeben werden. Der Mikroprozessor 13 der Eingabe- und Bedienungseinheit 12 führt anhand dieser ihm zugeführten Werte, den sog. Istwerten, einen Vergleich mit den vorgegebenen Sollwerten durch. Eine Abweichung vom vorgegebenen Sollwert, d.h., eine Abweichung von der gewünschten Düngerausbringmenge pro Flächeneinheit führt zu einer automatischen Verstellung der Einstellorgane 9 der Dosierorgane 10, so daß der vorgegebene Sollwert mit dem Istwert übereinstimmt.

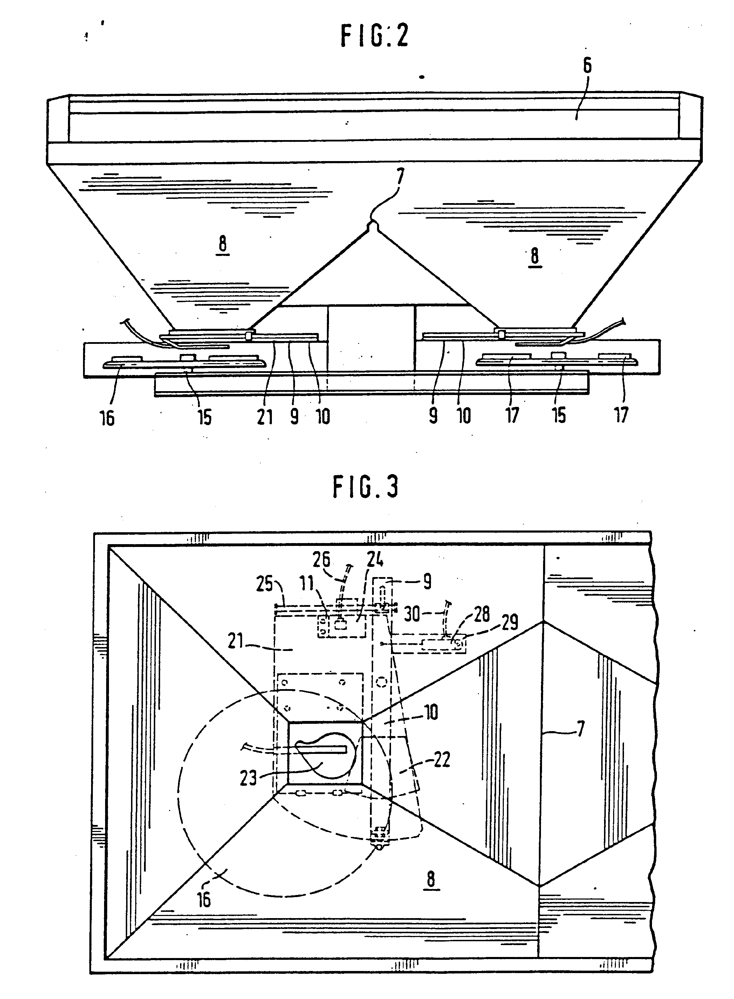

Gemäß den Fig. 2 und 3 sind die im unteren Bereich der trichterförmigen Behälterteile 8 angeordneten Einstellorgane jeweils als eine lösbare Bodenplatte 21 ausgebildet. Die jeweilige Bodenplatte 21 weist die mit den Schiebern 22 in verschiedenen Öffnungsweiten einstellbaren Auslauföffnungen 23 auf. Die aus dem von den Schiebern 22 freigegebenen Öffnungsquerschnitt der Auslauföffnungen 23 herausrieselnden Düngemittel gelangen auf die Schleuderscheiben 16 und werden von den jeweiligen Wurfelementen 17 erfaßt und über einen bestimmten Streubereich abgeschleudert. Die Einstellung der Öffnungsweite der Auslauföffnung 23 erfolgt über die mit dem Schieber 22 verbundene elektronische Einstellvorrichtung 11. Diese elektronische Einstellvorrichtung 11 ist auf der lösbaren Bodenplatte 21 angeordnet, und als Spindelmotor 24, der die Verstellspindel 25 aufweist, ausgebildet. Die Verstellung bzw. die Einstellung der Öffnungsweite der jeweiligen Auslauföffnung 23 erfolgt mit Hilfe des Spindelmotors 24 Die Betätigung des Spindelmotors 24 erfolgt von der auf dem Schlepper 5 angeordneten Eingabe- und Bedienungseinheit 12, die über das Kabel 26 mit der elektronischen Einstellvorrichtung 11 verbunden ist. Über die auf der Eingabe- und Bedienungseinheit 12 angeordnete Tastatur 27 läßt sich eine bestimmte Ausbringmenge pro Flächeneinheit vorwählen. Der Mikroprozessor 13 übernimmt die Steuerung der elektronischen Einstellvorrichtung 11 und stellt über eine entsprechende Schieberbetätigung die Öffnungsweite entsprechend des vorgegebenen Ausbringmengenwertes in Abhängigkeit von der Fahrgeschwindigkeit ein. Zur genauen Ermittlung der jeweiligen Schieberstellung des Schiebers 22 ist ein Wegaufnehmer 28, der mit Hilfe der Befestigungsplatte 29 an der lösbaren Bodenplatte 21 angeordnet ist, mit dem Schieber 22 verbunden. Der Wegaufnehmer 28 ermittelt die jeweilige Schieberstellung des Schiebers 22 und liefert den eine bestimmte Ausbringmenge repräsentierenden Wert an die Eingabe- und Bedienungseinheit 12, die über das Kabel 30 mit dem Wegaufnehmer verbunden ist. Der Mikroprozessor 13 der Eingabe- und Bedienungseinheit 12 vergleicht die vom Wegaufnehmer 28 erfaßte Schieberstellung des Schiebers 22, die einem bestimmten charakteristischen Mengenausbringwert entspricht mit dem vorgegebenen Sollwert und regelt so die Ausbringmenge des Schleuderstreuers 1 in Abhängigkeit von der momentanen Fahrgeschwindigkeit des Schleppers 5. Mit Hilfe des Mikroprozessors 13 der Eingabe- und Bedienungseinheit 12 ist es möglich, die vorgegebene, gewünschte Ausbringmenge pro Flächeneinheit während des Streuvorganges in Abhängigkeit von der Fahrgeschwindigkeit konstant zu halten, d.h., mit Hilfe des Mikroprozessors 13 ist es möglich, die momentane Ausbringmenge derart an die jeweilige Fahrgeschwindigkeit anzupassen, daß die gewünschte Ausbringmenge pro Flächeneinheit exakt eingehalten wird.

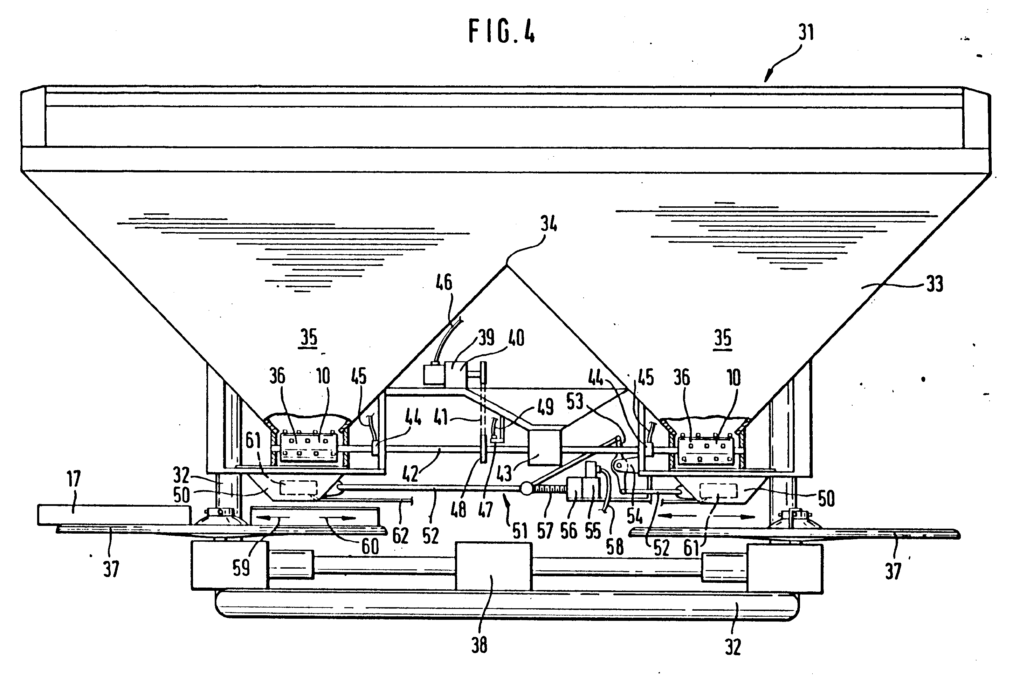

Der Anbauschleuderstreuer gemäß Fig. 4 ist ebenfalls als Schleuderstreuer 31 ausgebildet und weist einen Rahmen 32 auf, der auf seiner in Fahrtrichtung gesehen vorderen Seite mit Dreipunktkupplungselementen zum Anbau an den Schlepper 5 ausgebildet ist. An dem Rahmen 32 ist der Vorratsbehälter 33 befestigt der zwei durch das dachförmige Mittelteil 34 getrennte trichterförmige Behälterteile 35 aufweist. Die trichterförmigen Behälterteile 35 weisen jeweils die Dosierorgane 10, die als Dosierräder 36 ausgebildet sind auf, die die Behälterteile 35 nach unten verschließen. Die Dosierräder 36 sind als Nockenräder ausgebildet. Unter diesen Dosierorganen 10 ist jeweils eine als Schleuderscheibe 37 ausgebildete Verteileinrichtung angeordnet. Die Schleuderscheiben 37 werden über das Getriebe 38 von der Zapfwelle des den Anbauschleuderstreuer tragenden Schleppers in einander entgegengesetztem Drehsinn angetrieben.

Die aus den Dosierrädern 36 bestehende Dosiereinrichtung ist als Zwangsdosiersystem ausgebildet. Die in den beiden trichterförmigen Behälterteilen 35 angeordneten Dosierräder 36 werden über das regelbare Antriebsorgan 39, das als elektrischer Antriebsmotor 40 ausgebildet ist, angetrieben. Der Antriebsmotor 40 ist unter dem dachförmigen Mittelteil 34 angeordnet. Über den Kettentrieb 41 treibt der Antriebsmotor 40 die Dosierwelle 42 die Dosierräder 36 an. Die Dosierwelle 42 ist noch zusätzlich in dem Lagergehäuse 43 gelagert, und weist die Kupplungen 44 auf, die über das Kabel 45 mit der auf dem Schlepper angeordneten Eingabe- und Bedienungseinheit 12 verbunden sind. Die Betätigung der jeweiligen Kupplung 44 ermöglicht das Stillsetzen der Dosierräder 36, so daß sich die Materialzufuhr zu den jeweiligen Schleuderscheiben 37 getrennt und unabhängig voneinander unterbrechen läßt, so daß eine Reduzierung der effektiven Streubreite erfolgt. Über die Eingabe- und Bedienungseinheit 12 wird die Drehzahl der Dosierräder 36 entsprechend der gewünschten Ausbringmenge pro Flächeneinheit eingestellt. Hierzu erhält der Antriebsmotor 40 über das Kabel 46 entsprechende Impulse, so daß der Antriebsmotor 40 die Dosierräder 36 mit der richtigen Drehzahl antreibt. Zur Überwachung der Drehzahl der Dosierräder 36 ist eine Drehzahlüberwachungseinrichtung 47 vorgesehen, die mit dem Kettenrad 48 des Kettentriebes 41 zusammenwirkt und über das Kabel 49 der jeweiligen Drehzahl entsprechende Impulse an die Eingabe- und Bedienungseinheit 12 und somit an den Mikroprozessor 13 übermittelt.

Zwischen der aus den Dosierrädern 36 bestehenden Dosiereinheit und den Schleuderscheiben 37 ist jeweils das als Rutsche 50 ausgebildete Materialleitelement verschiebbar angeordnet. An den Rutschen 50 ist die Verstelleinrichtung 51 angeordnet. Diese Verstelleinrichtung 51 weist die Verstellhebel 52 auf, die an den Rutschen 50 angelenkt und über den Kipphebel 53 miteinander verbunden sind. Der Kipphebel 53 ist mit dem Gelenk 54 an dem dachförmigen Mittelteil 34 befestigt. Die Verstellhebel 52 sind mit dem elektrischen Verstellmotor 55 gekoppelt und mit dem selbsthemmenden Untersetzungsgetriebe 56 verbunden, welches die Verstellspindel 57 aufweist. Der elektrische Verstellmotor 55 ist ebenfalls an dem dachförmigen Mittelteil 34 befestigt und über das Kabel 58 mit der Eingabe- und Bedienungseinheit 12 verbunden. In Abhängigkeit der Drehzahl der Dosierräder 36 bzw. der Ausbringmenge erhält der Verstellmotor 55 Impulse von dem Mikroprozessor 13 der Eingabe und Bedienungseinheit 12, so daß die Rutschen 50 automatisch in Abhängigkeit von der Ausbringmenge verstellt werden. Bei kleineren Ausbringmengen wird die jeweilige Rutsche 50 in Pfeilrichtung 59 und bei größeren Ausbringmengen in Pfeilrichtung 60 verstellt, so daß sich der Aufgabeschwerpunkt des Materiales auf den Schleuderscheiben 37 bei größeren Ausbringmengen näher an der Schleuderscheibenaußenkante als bei kleineren Ausbringmengen befindet.

Da dem Mikroprozessor 13 der Eingabe- und Bedienungseinheit 12 Impulse über den zurückgelegten Weg bzw. über die tatsächliche, momentane Fahrgeschwindigkeit vom Fahrgeschwindigkeitssensor 19, der an dem Vorderrad 20 des Schleppers 5 angeordnet ist, zugeführt werden, wird die Ausbringmenge in Abhängigkeit von der Fahrgeschwindigkeit verändert, so daß die Ausbringmenge pro Flächeneinheit bei unterschiedlichen Fahrgeschwindigkeiten konstant bleibt.

Weiterhin sind in den Rutschen 50 die Sensoren 61 zur Erfassung der tatsächlichen momentanen Ausbringmenge angeordnet. Diese Sensoren 61 sind über die Kabel 62 ebenfalls mit der Eingabe- und Bedienungseinheit 12 verbunden. Der Mikroprozessor 13 der Eingabe- und Bedienungseinheit 12 ist derart programmiert, daß aufgrund der von den Sensoren 61 ermittelten Impulse über die tatsächliche Ausbringmenge die Rutschen 50 über die mit dem Mikroprozessor 13 verbundene Verstelleinrichtung 51 so verstellt werden, daß jeweils in Abhängigkeit der Größe der Ausbringmenge der optimale Aufgabeschwerpunkt des Materiales auf die Schleuderscheiben 37 gewährleistet ist. Somit werden die Rutschen 50, die die jeweilige Lage des Aufgabeschwerpunktes auf den Schleuderscheiben 37 bestimmen, in Abhängigkeit der Ausbringmenge automatisch bei Veränderung der Ausbringmenge verstellt.

Anhand der an diesem Schleuderstreuer 31 angeordneten jeweiligen Verstelleinrichtungen und der jeweiligen Überwachungseinrichtungen ist es zum einen möglich, die Ausbringmenge des Schleuderstreuers 37 in Abhängigkeit von der jeweiligen Fahrgeschwindigkeit konstant zu halten. Weiterhin ist es in besonders einfacher Weise möglich, über das regelbare Antriebsorgan 39 eine Veränderung der Ausbringmenge vorzugnehmen, so daß eine Anpassung der Ausbringmenge an den jeweiligen Nährstoffbedarf der zu bestreuenden Fläche durchführbar ist. Die Änderung der Ausbringmenge wird in die Eingabe- und Bedienungseinheit 12 des Mikroprozessors 13 eingegeben, wodurch eine automatische Verstellung der Einstell- und Verstellorgane des Schleuderstreuers 31 erfolgt, so daß der Dünger entsprechend des neu gewählten Ausbringmengenwertes ausgebracht wird. Mit Hilfe des Mikroprozessors 13 wird der Schleuderstreuer 31 in der Weise verstellt, so daß die gewünschte Ausbringmenge pro Flächeneinheit wieder in Abhängigkeit von der Fahrgeschwindigkeit geregelt und konstant gehalten wird.

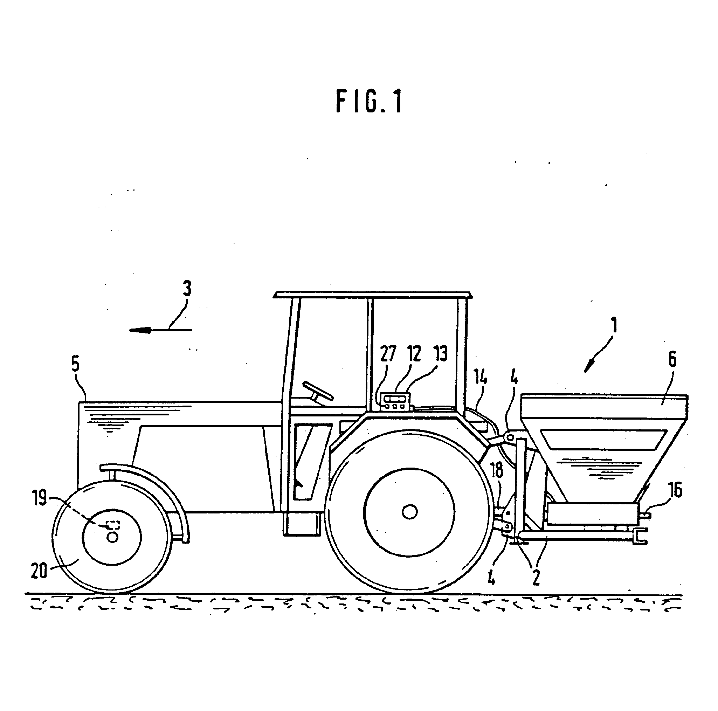

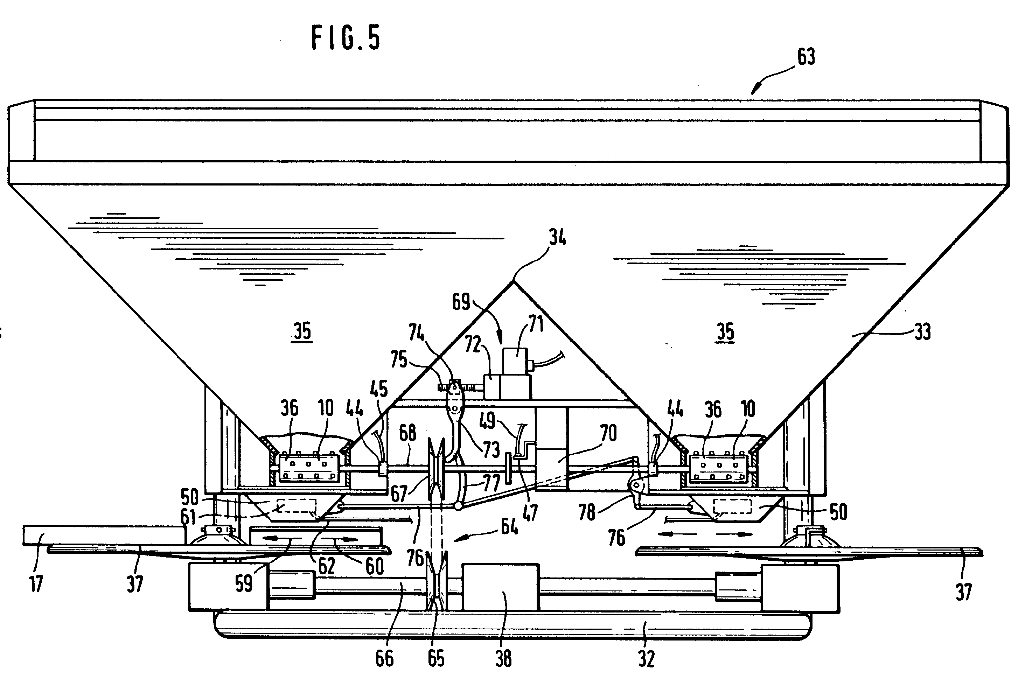

Der Schleuderstreuer 63 gemäß Fig. 5 unterscheidet sich durch einen anderen Antrieb der Dosierräder 36 und der Verstellung der Rutschen 50 von dem Schleuderstreuer 31 gemäß Fig. 1. Die Dosierräder 36 werden von dem als Variatorgetriebe 64 ausgebildeten Regelgetriebe angetrieben. Die Antriebsscheibe 65 des Variatorgetriebes 64 ist auf der Welle 66 des Getriebes 38 und die Abtriebswelle 67 des Variatorgetriebes 64 auf der Antriebswelle 68 der Dosierräder 36 befestigt. An dem dachförmigen Mittelteil 34 ist die Verstelleinrichtung 69 des Variatorgetriebes 64 angebracht. Die Antriebswelle 68 der Dosierräder 36 ist noch in dem unter dem dachförmigen Mittelteil 34 befestigten Lagergehäuse 70 gelagert. Die Verstelleinrichtung 69 des Variatorgetriebes 64 weist den elektrischen Verstellmotor 71, der mit der Eingabe- und Bedienungseinheit 12 verbunden ist, mit dem selbsthemmenden Untersetzungsgetriebe 72 auf. An dem dachförmigen Mittelteil 34 ist weiterhin der Verstellhebel 73 mit dem Gelenk 74 gelagert. Der Verstellhebel 73 ist mit seiner einen Seite mit der Verstellspindel 75 des Untersetzungsgetriebes 72 verbunden und mit seiner anderen Seite drückt er auf die Abtriebsscheibe 67 des Variatorgetriebes 64. Somit kann über die Verstelleinrichtung 69 der wirksame Durchmesser des Variatorgetriebes 64 variiert werden, so daß sich jeweils entsprechende Drehzahlen der Dosierräder 36 und somit die gewünschte Ausbringmenge einstellen lassen. Zwischen den Dosierrädern 36 der Dosiereinrichtung und den Schleuderscheiben 37 sind ebenfalls jeweils die als Rutschen 50 ausgebildeten Materialleitelemente verschiebbar angeordnet. An diesen Rutschen 50 sind die Verstellhebel 76 angeordnet, die mit dem Verstellhebel 73 der Verstelleinrichtung 69 des Variatorgetriebes 64 gekoppelt sind. Hierzu ist an dem Verstellhebel 73 der Hebel 77 angebracht, der mit den Verstellhebeln 76 gelenkig verbunden ist. Zwischen den Verstellhebeln 76 ist noch der Kipphebel 78 als Übersetzungselement angeordnet, so daß die Rutschen 50 entsprechend der gegensinnigen Drehrichtung der Schleuderscheiben 37 ebenfalls gegensinnig verstellt werden.

Die Rutschen 50 der Schleuderstreuer 31 und 63 sind in nicht dargestellter Weise leicht abnehmbar bzw. wegschwenkbar angeordnet, so daß die auf ihren Antriebswellen auswechelbar angeordneten Schleuderscheiben 37 von ihren Antriebswellen abgenommen und andere Schleuderscheiben auf diesen Antriebswellen angeordnet werden können.

Die Funktionsweise und Verstellung der als Materialleitelemente ausgebildeten Rutschen 50 läßt sich folgendermaßen beschreiben:

Durch den elektrischen Verstellmotor 71 der Verstelleinrichtung 69 wird die entsprechende Drehzahl der Dosierräder 36 über das Variatorgetriebe 64 für die gewünschte Ausbringmenge bei der Normaldrehzahl der Schlepperzapfwelle eingestellt. Das von den Dosierrädern 36 aus dem Vorratsbehälter 33 dosierte Material wird von den Rutschen 50 auf die Schleuderscheiben 37 geleitet. Die Rutschen 50 bestimmen den Aufgabeschwerpunkt des Materiales auf den Scheiben 37. Da die Rutschen 50 mit dem Verstellmechanismus 69 des Regelgetriebes 64 gekoppelt sind, werden die Rutschen 50 bei jeder Veränderung der Drehzahl der Dosierräder 36 über das Variatorgetriebe 64 in Abhängigkeit der Ausbringmenge automatisch bei Veränderung der Ausbringmenge verstellt. Bei Vergrößerung der Ausbringmenge werden die Rutschen 50 in Pfeilrichtung 60, d.h., in Richtung der Schleuderscheibenaußenkante verstellt, während sie bei Verkleinerung der Ausbringmenge in Pfeilrichtung 59, d.h., in Richtung der Schleuderscheibendrehachse verstellt werden.

Auf der Antriebswelle 68 der Dosierräder 36 sind jeweils einem Dosierrad 36 zugeordnete Kupplungen 44 angeordnet, die über das Kabel 45 mit der Eingabe und Bedienungseinheit 12 verbunden sind. Hierdurch ist es möglich, den Antrieb zu den einzelnen Dosierrädern 36 derart zu unterbrechen, so daß den jeweiligen Schleuderscheiben 37 kein Material mehr zugeführt wird, so daß eine Veränderung der effektiven Streubreite erfolgt. Weiterhin befindet sich ebenfalls eine Drehzahlüberwachungseinrichtung 47 an der Antriebswelle 68, die die Antriebsdrehzahl der Dosierräder 36 erfaßt. Diese Drehzahlüberwachungseinrichtung 47 ist über das Kabel 49 mit der Einstell- und Bedienungseinheit 12 verbunden und liefert der jeweiligen Drehzahl entsprechende charakteristische Impulse an den Mikroprozessor 13 der Eingabe und Bedienungseinheit 12. Über die in den Rutschen 50 angeordneten Sensoren 61 wird die tatsächliche momentane Ausbringmenge erfaßt und über das Kabel 62 an den Mikroprozessor 13 übermittelt. Die in den Mikroprozessor 13 über die Tastatur 27 eingegebene, gewünschte Ausbringmenge läßt sich mit Hilfe des Mikroprozessors 13 derart regeln, so daß die Dosierräder 36 in der Weise angetrieben werden, daß die Menge des den Schleuderscheiben 37 zugeführten Materiales der tatsächlichen momentanen Fahrgeschindigkeit entspricht, so daß die in den Mikroprozessor 13 eingegebene, gewünschte Ausbringmenge pro Flächeneinheit exakt eingehalten wird. Diese gewünschte Ausbringmenge läßt sich aber durch eine entsprechende Betätigung der Tastatur 27 der Eingabe und Bedienungseinheit 12 während des Streuvorganges jederzeit verändern, so daß der zu bestreuendenden Fläche die Düngemittel entsprechend des erforderlichen Nährstoffbedarfes zugeführt werden, so daß sich eine optimale Nährstoffversorgung des Bodens erreichen läßt. Der jeweils neu eingegebene Ausbringmengenwert wird stets in Abhängigkeit von der Fahrgeschwindigkeit geregelt, so daß sich immer eine konstante Ausbringmenge entsprechend des jeweils eingestellten Ausbringmengenwertes ergibt.

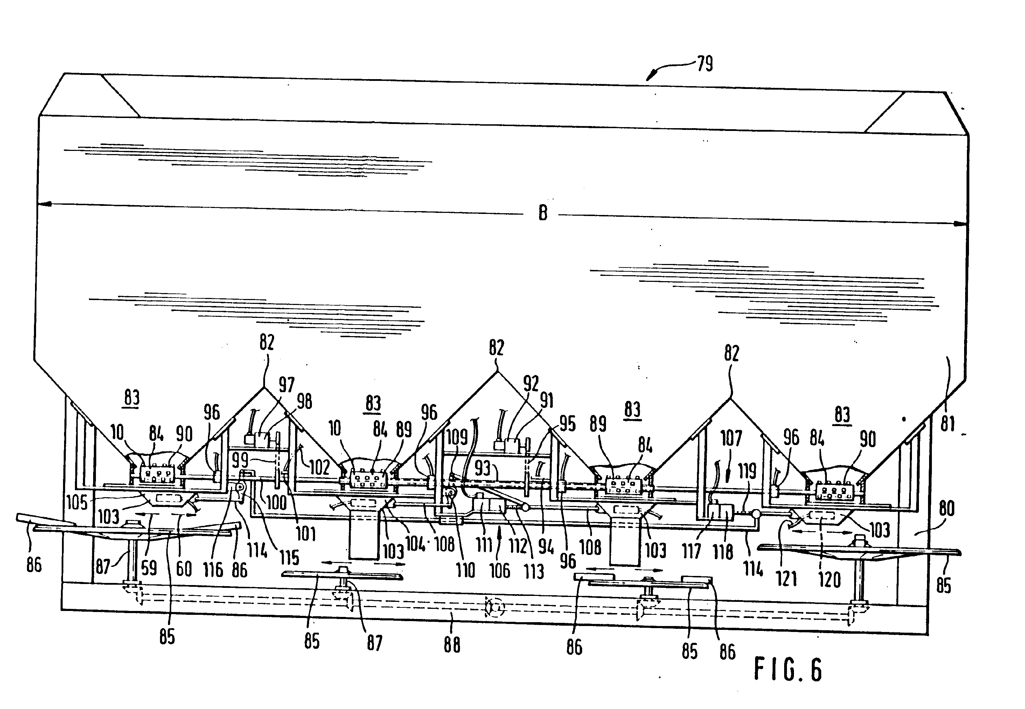

Der Schleuderstreuer 79 gemäß Fig. 6 ist ebenfalls als Anbauschleuderstreuer ausgebildet und weist den Rahmen 80, sowie den Vorratsbehälter 81 auf. An seiner in Fahrtrichtung weisenden vorderen Seite ist dieser Schleuderstreuer 79 mit Dreipunktkupplungselementen ausgestattet und läßt sich so mit dem Dreipunktkraftheber des Schleppers 5 verbinden. Der Vorratsbehälter 81 weist eine Breite B auf, die das zulässige Maß für den Transport landwirtschaftlicher Maschinen auf öffentlichen Straßen und Wegen nicht übersteigt. Der untere Bereich des Vorratsbehälters 81 ist durch drei dachförmige Teile 82 in vier Behälterspitzen 83 aufgeteilt. Jede Behälterspitze 83 weist eine Dosiereinrichtung auf, die als Dosierräder 84 ausgebildet sind und die Behälterspitzen 83 nach unten verschließen. Unterhalb jeder Behälterspitze 83 sind jeweils die Schleuderscheiben 85 quer zur Fahrtrichtung des Schleuderstreuers 79 gesehen angeordnet, wobei jeder Behälterspitze 83 jeweils eine Schleuderscheibe 85 zugeordnet ist. Diese Schleuderscheiben 85 sind jeweils mit zwei Wurfschaufeln 86 bestückt. Die Schleuderscheiben 85 werden jeweils um die aufrechte Achse 87 rotierend von der Zapfwelle des den Düngerstreuer tragenden Schleppers 5 angetrieben. Der Antrieb der in unterschiedlichen Höhen angeordneten Schleuderscheiben 85 erfolgt über das Zahnradgetriebe 88 von der Schlepperzapfwelle des Schleppers 5. Die Anordnung der Schleuderscheiben 85 ist derart gewählt, daß die in dem gleichen Abstand zur Maschinenmitte angeordneten beiden inneren Schleuderscheiben in bezug auf die äußeren Schleuderscheiben 85 tiefer angeordnet sind. Das Zahnradgetriebe 88 ist derart ausgebildet, daß die jeweils auf einer Seite der Maschinenmitte angeordneten Schleuderscheiben 85 mit gleichem Drehsinn angetrieben werden. D.h., jeweils eine innere, tiefer angeordnete Schleuderscheibe und eine äußere Schleuderscheibe 85 werden mit gleichem Drehsinn angetrieben. Die jeweils rechts und links der Maschinenmitte angeordneten Schleuderscheiben 85 werden jedoch gegenläufig angetrieben.

Der Antrieb der Dosierräder 84 ist derart ausgebildet, daß die jeweils inneren Dosierräder 89 getrennt und unabhängig von den äußeren Dosierrädern 90 antreibbar sind. Der Antrieb der inneren Dosierräder 89 erfolgt von dem regelbaren Antriebsorgan 91, das als elektrischer Antriebsmotor 92 ausgebildet ist. Die inneren Dosierräder 89 sind auf der als Hohlwelle ausgebildeten Antriebswelle 93 gelagert. Die Drehzahl der Antriebswelle 93 wird mit Hilfe der Drehzahlüberwachungseinrichtung 94 ermittelt. Der Antrieb der Antriebswelle 93 erfolgt mit Hilfe des Kettentriebes 95 Weiterhin sind auf der Antriebswelle 93 die beiden Kupplungen 96 angeordnet, mit deren Hilf sich der Antrieb zu den jeweiligen inneren Dosierrädern 89 beliebig unterbrechen läßt, so daß die Materialzufuhr zu den jeweils inneren Schleuderscheiben 85 getrennt und unabhängig voneinander unterbrochen werden kann. Der Antrieb der jeweiligen äußeren Dosierräder 90 erfolgt mit Hilfe des regelbaren Antriebsorganes 97, das ebenfalls als elektrischer Antriebsmotor 98 ausgebildet ist. Mit Hilfe des Kettentriebes 99 erfolgt der Antrieb der Antriebswelle 100, auf der die äußeren Dosierräder 90 befestigt sind. Die Antriebswelle 100 ist ebenfalls mit Kupplungen 96 ausgerüstet, so daß sich der Antrieb zu den jeweiligen äußeren Dosierrädern 90 getrennt und unabhängig von diesen Dosierrädern unterbrechen läßt, so daß die Materialzufuhr sich auch zu den beiden äußeren Schleuderscheiben 85 unterbrechen läßt. Zur Überwachung der Drehzahl ist das Drehzahlüberwachungselement 101 derart angeordnet, so daß es der jeweiligen Drehzahl dieser Antriebswelle 100 entsprechende Signale an die Eingabe- und Bedienungseinheit 12, über die das Element mit dem Kabel 102 verbunden ist, liefert.

Unterhalb der jeweiligen Dosierräder 84 ist jeweils das als Rutsche 103 ausgebildete Materialleitelement verschiebbar angeordnet. Die einzelnen Rutschen 103 sind derart miteinander verbunden, so daß jeweils eine gleichzeitige Verstellung der beiden inneren Rutschen 104 und der beiden äußeren Rutschen 105 unabhängig voneinander erfolgt. Hierbei ist den innern Rutschen 104 die Verstelleinrichtung 106 und den äußeren Rutschen 105 die Verstelleinrichtung 107 zugeordnet. Die Verstelleinrichtung 106 weist die Verstellhebel 108 auf, die an den Rutschen 104 angeordnet und über den Kipphebel 109 miteinander verbunden sind. Der Kipphebel 109 ist mit dem Gelenk 110 an dem dachförmigen Mittelteil 82 befestigt. Weiterhin ist an den Verstellhebeln 108 der elektrische Verstellmotor 111 mit dem selbsthemmenden Untersetzungsgetriebe 112, welches die Verstellspindel 113 aufweist, angeordnet. Der elektrische Verstellmotor 111 ist unterhalb des mitteleren dachförmigen Teiles 82 befestigt.

Die Verstelleinrichtung 107 der äußeren Rutschen 105 weist die Verstellhebel 114 auf, die an den Rutschen 105 angeordnet und über den Kipphebel 115 miteinander verbunden sind. Der Kipphebel 115 ist mit dem Gelenk 116 an dem linken dachförmigen Teil 82 befestigt. An den Verstellhebel 114 ist der elektrische Verstellmotor 117 mit dem selbsthemmenden Untersetzungsgetriebe 118, welches die Verstellspindel 119 aufweist, angeordnet. Der elektrische Verstellmotor 117 der äußeren Rutschen 105 ist unterhalb des rechten dachförmigen Mittelteiles befestigt. Sowohl die Hebelanordnung, über welche die beiden inneren Rutschen 104 und die beiden äußeren Rutschen 105 miteinander verbunden sind, ist derartig gewählt, so daß sich die jeweiligen Rutschen 104, 105 entsprechend der gegensinnigen Drehrichtung der Schleuderscheiben 85 ebenfalls gegensinnig verstellen lassen.

Zur Erfassung der tatsächlichen momentanen Ausbringmenge sind die Sensoren 120 in den jeweiligen Rutschen 103 angeordnet. Diese Sensoren 120 sind über die Kabel 121 mit dem Mikroprozessor 13 der Eingabe- und Bedienungseinheit 12 verbunden. Durch eine entsprechende Programmierung des Mikroprozessors 13 erfolgt aufgrund der von den Sensoren 120 ermittelten Impulse über die tatsächliche Ausbringmenge eine Verstellung der Rutschen 103 über die ebenfalls mit dem Mikroprozessor verbundenen Verstelleinrichtungen 106 und 107, so daß in Abhängigkeit der Größe der Ausbringmenge der optimale Aufgabeschwerpunkt des Materiales auf die Schleuderscheiben 85 gewährleistet ist. Somit werden die Rutschen 103, die die Lage des Aufgabeschwerpunktes auf den Schleuderscheiben 85 bestimmen, in Abhängigkeit der Ausbringmenge automatisch bei Veränderung der Ausbringmenge verstellt.

Dadurch, daß die regelbaren Antriebsorgane 91 und 97, die Drehzahlüberwachungseinrichtungen 94 und 101, die Kupplungen 96, die elektrischen Verstellmotore 111 und 117 der jeweiligen Verstelleinrichtungen 106 und 107 und die Sensoren 120 zur Erfassung der tatsächlichen momentanen Ausbringmenge jeweils über entsprechende Kabelverbindungen mit dem Mikroprozessor 13 der Eingabe- und Bedienungseinheit 12 verbunden sind, läßt sich die Einund Verstellung der Ausbringmenge sowie die Veränderung der effektiven Streubereite vom Schlepper aus durchführen. Da dem Mikroprozessor 13 ebenfalls Signale entsprechend der momentanen Fahrgeschwindigkeit übermittelt werden, erfolgt stets eine Anpassung der Ausbringmenge an die momentane Fahrgeschwindigkeit, so daß die jeweils gewünschte Ausbringmenge in Abhängigkeit von der Fahrgeschwindigkeit konstant gehalten wird.

Eine Veränderung der effektiven Streubreite läßt sich somit auf einfachste Weise vom Schlepper aus durchführen, wobei ebenfalls eine Veränderung der Ausbringmenge vom Schlepper aus vorgenommen werden kann, so daß der zu bestreuenden Fläche genau die dem jeweiligen Nährstoffbedarf der zu bestreuenden Fläche notwendige Düngemittelmenge zugeführt werden kann. Hierdurch läßt sich der Düngerstreuer exakt an die jeweils erforderlichen Einsatzbedingungen anpassen.

Mit Hilfe der Eingabe- und Bedienungseinheit 12 kann der Landwirt die Düngerausbringmenge entsprechend eines vorhandenen Nährstoffprofils der zu bestreuenden Fläche in einfacher Weise verändern, so daß der zu bestreuenden Fläche genau die zum Decken des erforderlichen Nährstoffbedarfes notwendigen Düngemittel zugeführt werden. Hierdurch lassen sich speziell auf den jeweiligen Nährstoffbedarf der zu bestreuenden Fläche abgestimmte Düngergaben ausbringen. Dieses Verändern der Düngerausbringmenge entsprechend des erforderlichen Nährstoffbedarfes der zu bestreuenden Fläche läßt sich sowohl manuell als auch automatisch vom Mikroprozessor durchführen. Zur automatischen Verstellung des Schleuderstreuers in Abhängigkeit des erforderlichen Nährstoffbedarfes übernimmt der Mikroprozessor 13 der Eingabe- und Bedienungseinheit die Verstellung der jeweiligen Einstellorgane der Dosierorgane entsprechend eines im Mikroprozessor 13 gespeicherten Nährstoffprofiles der zu bestreuenden Fläche.

Weiterhin ist es möglich, am Schlepper 5 einen in den Boden eingreifenden Fühler anzuordnen, der entsprechende, hinsichtlich des erfordlichen Nährstoffbedarfes aussagefähige Signale an den Mikroprozessor 13 der Eingabe- und Bedienungseinheit 12 liefert. Anhand dieser vom Fühler ausgesendeten Signale ermittelt der Mikroprozessor 13 die zur optimalen Nährstoffversorgung notwendige Düngermenge, und nimmt anhand des ermittelten Nährstoffbedarfes eine Verstellung der Einstellorgane der Dosierorgane vor, so daß der zu bestreuenden Fläche genau die zur Deckung der optimalen Nährstoffversorgung notwendige Düngermittelmenge zugeführt wird.

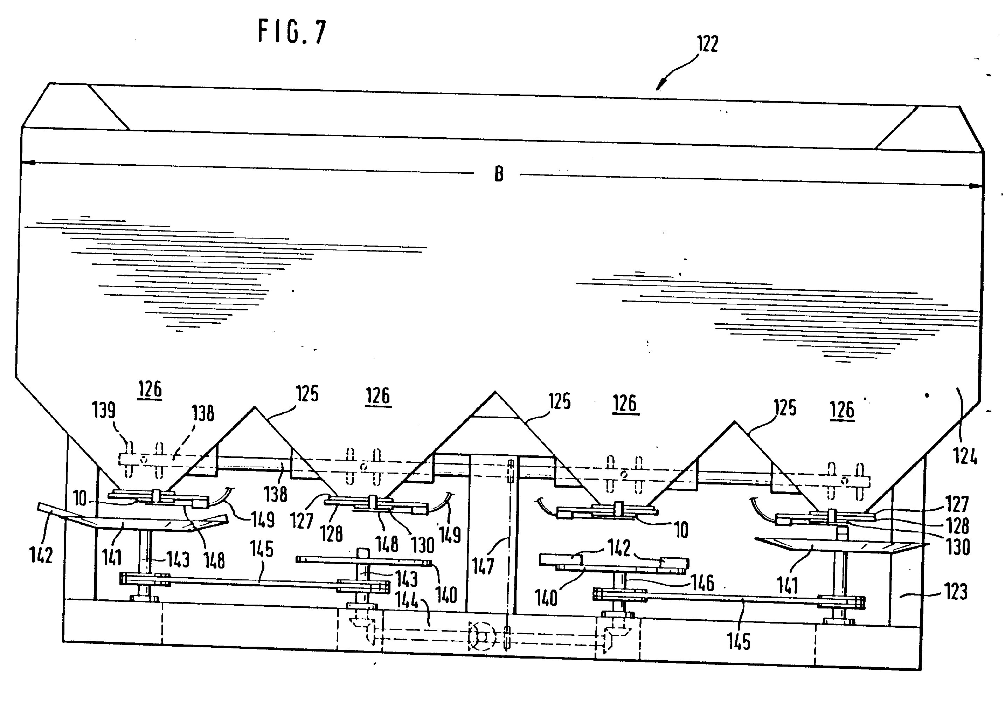

Der Zentrifugaldüngerstreuer gemäß Fig. 7 ist ebenfalls als Schleuderstreuer 122 ausgebildet und weist den Rahmen 123 sowie den Vorratsbehälter 124 auf. Dieser Schleuderstreuer 122 weist an seiner in Fahrtrichtung weisenden vorderen Seite die bekannten und nicht näher dargestellten Dreipunktkupplungselemente auf, über welche er sich in bekannter Weise mit dem Dreipunktkraftheber des Schleppers verbinden läßt. Der untere Bereich des Vorratsbehälters 124 ist durch drei dachförmige Teile 125 in vier Behälterspitzen 126 aufgeteilt. Jede Behälterspitze 126 weist eine ebene Grundplatte 127 auf, an die die abnehmbare Bodenplatte 128, in welcher sich die Auslauföffnungen 129 befinden, befestigt ist. Unterhalb der leicht lösbaren Bodenplatte 128 ist jeweils ein als Schieber 130 ausgebildetes Dosierorgan, mit dem die Öffnungsweite der jeweiligen Auslauföffnung 129 einzustellen oder zu verschließen ist, angeordnet. Die Schieber 130 sind sowohl unabhängig voneinander zusammen über die Eingabe- und Bedienungseinheite 12 vom Schlepper aus zu betätigen. Die Betätigung eines jeden Schiebers 130 erfolgt jeweils über einen elektrischen Stellmotor 131, der mit einer Verstellspindel 132 ausgerüstet und auf der Bodenplatte 128 befestigt ist. Die Verstellspindel 132 ist gelenkig mit dem Verstellhebel 133 des Schiebers 130 verbunden. Mit dem Verstellhebel 133 wirkt ein elektronischer Ausnehmer 134 zusammen, der zur Ermittlung der jeweiligen Schieberstellung des um den Bolzen 135 schwenkbar gelagerten Schiebers 130 dient. Der elektrische Stellmotor 131 und der elektronische Aufnehmer 134 sind über die Kabel 136 und 137 mit der Eingabe- und Bedienungseinheit 12 des Mikroprozessors 13 verbunden. In dem unteren Bereich der Behälterspitzen 126 erstreckt sich die horizontal verlaufende und antreibbare Rührwelle 138, die in den Wandungen der Behälterspitzen 126 gelagert und abgedichtet ist. Die Rührwelle 138 ragt in sämtliche Behälterspitzen 126 hinein und weist im inneren des Vorratsbehälter 124, im Bereich der Behälterspitzen 126, die Rührstifte 139 auf.

Unterhalb der Auslauföffnungen 129 der Behälterspitzen 126 sind jeweils die Schleuderscheiben 140 und 141 quer zur Fahrtrichtung des Schleuderstreuers gesehen nebeneinander angeordnet und mit jeweils zwei Wurfschaufeln 142 bestückt. Die Schleuderscheiben 140, 141 werden jeweils um die aufrechte Achse 143 von der Zapfwelle des den Düngerstreuer tragenden Schleppers 5 angetrieben. Die Schleuderscheiben 140, 141 sind in unterschiedlichen Höhen zueinander angeordnet. Die beiden inneren, etwas tiefer angeordneten Schleuderscheiben 140, die im gleichen Abstand zur Maschinenmitte angeordnet sind, werden über das zahnradgetriebe 144 von der Schlepperzapfwelle angetrieben, so daß die Schleuderscheiben 140 um ihre aufrechte Achse 143 rotieren. Die äußeren, in bezug auf die inneren Schleuderscheiben 140 etwas höher angeordneten Schleuderscheiben 141 werden über die Keilriementriebe 145 von den Wellen 146 der inneren Schleuderscheiben 140 angetrieben und in Rotation versetzt. Das Zahnradgetriebe 144 treibt weiterhin über den Kettentrieb 147 die Rührwelle 138 an. Die Schleuderscheiben 140, 141 sind leicht lösbar auf den Wellen 143 angeordnet, so daß sie auf einfache Weise bei Bedarf gegen andere, bzw. anders ausgebildete Schleuderscheiben auszutauschen sind. Die auf den Schleuderscheiben 140 und 141 jeweils aufgesetzten Wurfschaufeln 142 sind in bezug auf die jeweils benachbarte Schleuderscheibe winkelversetzt zueinander angeordnet.

Den rotierend angetriebenen Schleuderscheiben 140, 141 werden mit Hilfe der Schieber 130 die auszubringenden Düngemittelpartikel in genau einstellbaren Mengen zugeführt. Diese Düngemittelpartikel werden von denen auf den rotierenden Schleuderscheiben 140, 141 angeordneten Wurfschaufeln 142 abgeschleudert und gleichmäßig auf der Bodenoberfläche verteilt. Die gewünschte Ausbringmenge läßt sich mit Hilfe der Einstell- und Bedienungseinheit 12, die auf dem Schlepper 5 angeordnet ist, einstellen und verstellen. Hierbei übernimmt der Mikroprozessor 13 der Eingabe- und Bedienungseinheit 12 die automatische Regelung der Ausbringmenge in Abhängigkeit von der momentanen Fahrgeschwindigkeit, so daß die gewünschte Ausbringmenge pro Flächeneinheit konstant gehalten wird. Die tatsächliche Ausbringmenge wird mit Hilfe der unterhalb der Auslauföffnungen 129 angeordneten Sensoren 148 erfaßt und an den Mikroprozessor 13, mit dem die Sensoren über die Kabel 149 verbunden sind, weitergeleitet. Die Sensoren 148 erfassen die momentane Ausbringmenge der jeweiligen Auslauföffnungen 129 unabhängig voneinander und liefern der momentanen Ausbringmenge entsprechende charakteristische Signale, die an den Mikroprozessor 13 übermittelt und hier verarbeitet werden. Dieser Mikroprozessor 13 verarbeitet die ihm zugeführten Signale derart, daß eine Regelung der Ausbringmenge in Abhängigkeit von der momentanen Fahrgeschwindigkeit erfolgt. Des weiteren läßt sich die Ausbringmenge mit Hilfe der Einstell- und Bedienungseinheit 12 während des Streuvorganges beliebig verändern, wobei jeweils immer eine Regelung der Ausbringmenge unter Berücksichtigung des jeweils eingestellten Sollwertes in Abhängigkeit von der Fahrgeschwindigkeit erfolgt.

Den jeweiligen Schleuderscheiben 140, 141 sind die auszubringenden Materialien auch in unterschiedlichen Mengen zuführbar, wodurch sich unterschiedlich große, gewünschte Ausbringmengen innerhalb der effektiven Streubreite des Schleuderstreuers 122 ausbringen lassen. D.h., den einzelnen Schleuderscheiben 140, 141 lassen sich unterschiedlich große Düngermittelmengen zuführen, wodurch eine Anpassung an den individuellen Nährstoffbedarf der von der jeweiligen Schleuderscheibe bestreuten Fläche erfolgt, so daß der zu bestreuenden Fläche jeweils genau die zur optimalen Nährstoffversorgung notwendigen Düngemittelmengen zugeführt werden. Hierbei erfolgt die Regelung der jeweils an den einzelnen schleuderscheiben eingestellten Ausbringmenge immer in Abhängigkeit von der momentanen Fahrgeschwindigkeit, so daß die Ausbringmenge innerhalb eines Streubereiches einer jeden Schleuderscheibe konstant ist.

Neben dem Anordnen der Schleuderscheiben 140, 141 in unterschiedlichen Höhen soll ein gegenseitiges Behindern der von den Wurfschaufeln 142 der jeweiligen Schleuderscheiben abgeschleuderten Düngemittelpartikel dadurch verhindern wird, daß die Wurfschaufeln 142 auf den jeweils einander benachbarten Schleuderscheiben winkelversetzt zueinander angeordnet sind. Hierdurch wird erreicht, daß sich die einzelnen Düngemittelpartikel nicht gegenseitig auf ihren Wurfbahnen behindern.

Der Vorratsbehälter 124 mit seinen unterhalb seines Behälters innerhalb des vom Behälter 124 seitlich begrenzten Bereiches angeordneten Schleuderscheiben 140, 141 weist eine Breite B auf, die sowohl in der Betriebsals auch in der Transportstellung kleiner oder gleich 3 m ist. Hierdurch kann die Maschine ohne Umbau auf öffentlichen Straßen und Wegen transportiert werden.

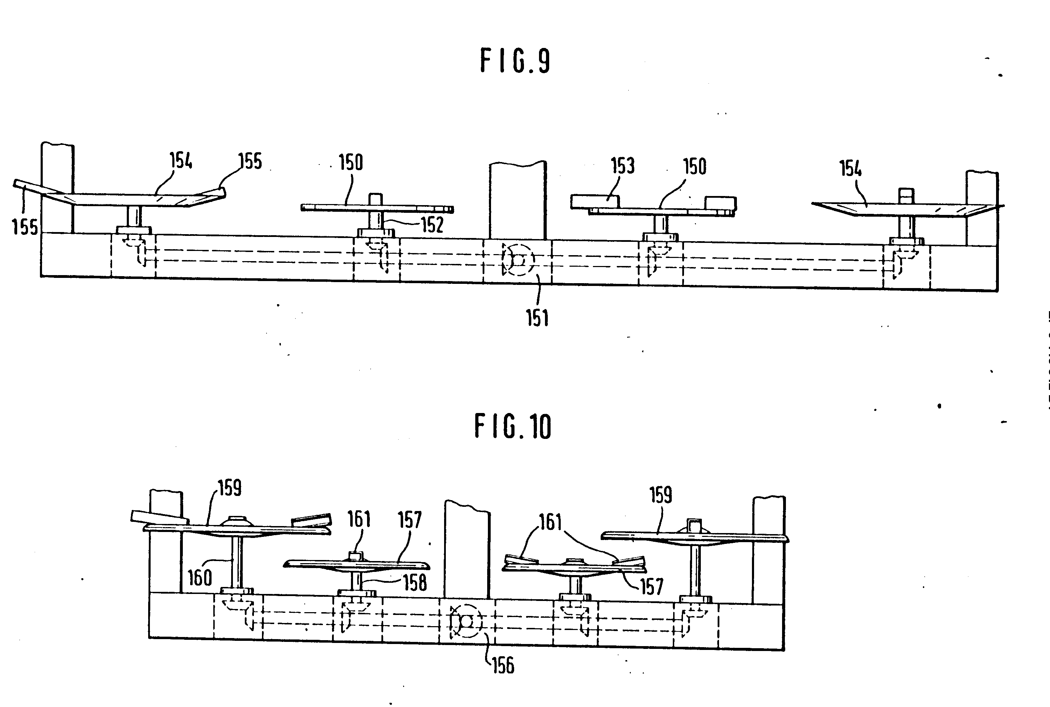

Die Fig. 9 zeigt eine weitere Möglichkeit der Schleuderscheibenanordnung und des Antriebes für diese Schleuderscheiben. Hierbei sind die beiden inneren, etwa tiefer angeordneten Schleuderscheiben 150 im gleichen Abstand zur Maschinenmitte angeordnet, und werden über das Zahnradgetriebe 151 von der Schlepperzapfwelle angetrieben, so daß die Schleuderscheiben 150 um ihre aufrechte Achse 152 rotieren. Die Wurfschaufeln 153 sind derart auf den Schleuderscheiben 150 befestigt, so daß die Düngemittel waagerecht von den Schleuderscheiben 150 abgeschleudert werden. Die äußeren, in bezug auf die inneren Schleuderscheiben 150 etwas höher angeordneten Schleuderscheiben 154 werden ebenfalls über das Zahnradgetriebe 151 angetrieben und in Rotation versetzt. Die Schleuderscheiben 154 sind derart ausgebildet, so daß die auf diesen Schleuderscheiben 154 angeordneten Wurfschaufeln 155 die Düngemittel beim Abschleudern anheben, so daß sich die Flugbahnen der von den einzelnen Schleuderscheiben 150, 154 abgeschleuderten Düngemittelpartikel nicht gegenseitig behindern, was durch die winkelversetzte Anordnung der Wurfschaufeln 153, 155 auf den jeweils benachbarten Schleuderscheiben 150, 154, weiterhin unterbunden werden soll. Der Antrieb der Schleuderscheiben die jeweils auf einer Seite der Maschinenmitte angeordnet sind, erfolgt in gleicher Drehrichtung, wobei die jeweils rechts und links der Maschinenmitte angeordneten Schleuderscheiben in entgegengesetzter Drehrichtung angetrieben werden.

Die Fig. 10 zeigt eine weitere Möglichkeit der Schleuderscheibenanordnung wobei die einzelnen Schleuderscheiben über das Zahnradgetriebe 156 angetrieben werden. Hierbei sind die beiden inneren Schleuderscheiben 157 im gleichen Abstand zur Maschinenmitte angeordnet und rotieren um die aufrechte Achse 158. Die äußeren, in bezug auf die inneren Schleuderscheiben 157 etwas höher angeordneten Schleuderscheiben 159 befinden sich teilweise genau über den Schleuderscheiben 157 und werden um die aufrechte Achse 160 angetrieben. Die einander jeweils benachbarten Schleuderscheiben 157, 159 werden jeweils gegenläufig rotierend angetrieben. Um ein gegenseitiges Behindern der von den Schleuderscheiben abgeschleuderten Düngemittelpartikel zu verhindern, sind auch hier die auf den jeweiligen Schleuderscheiben angeordneten Wurfschaufeln 161 winkelversetzt angeordnet.

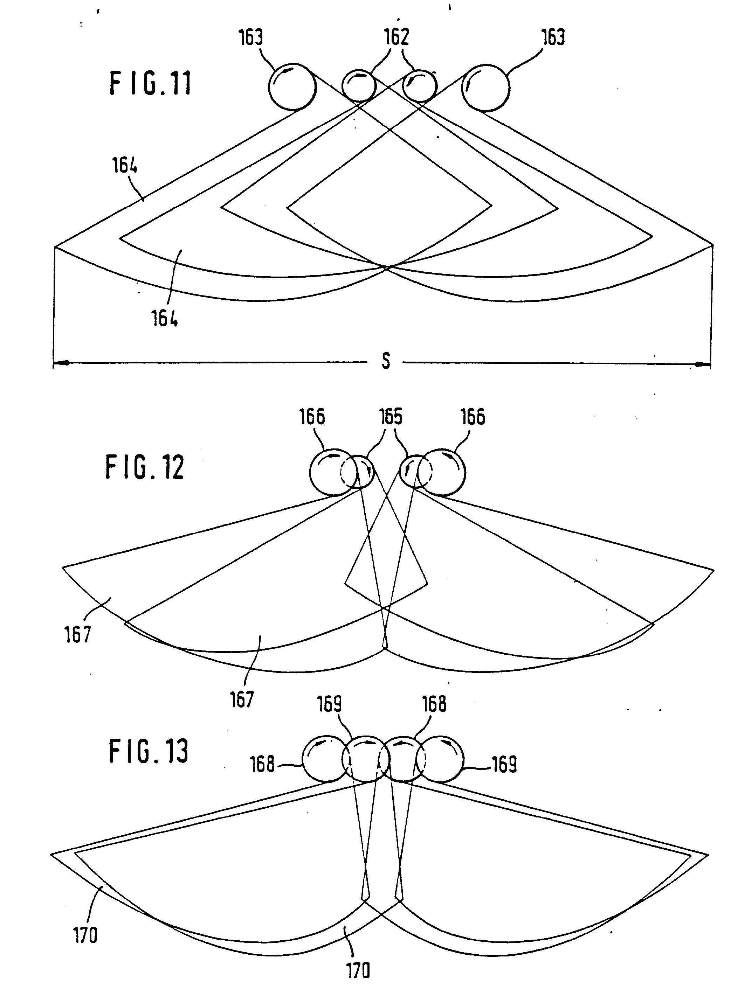

Die Fig. 11 bis 15 zeigen die unterschiedliche Anordnung von Schleuderscheiben und die von diesen Schleuderscheiben jeweils erzeugten einzelnen Streufächer in Prinzipdarstellung. Die Fig. 11 zeigt die Anordnung von vier Schleuderscheiben 162 und 163. Hierbei sind die beiden inneren Schleuderscheiben 162 in bezug auf die äußeren Schleuderscheiben 163 etwas tiefer angeordnet. Die Schleuderscheiben werden in der jeweils eingezeichneten Pfeilrichtung angetrieben und erzeugen jeweils einen Streufächer in der dargestellten Weise, und lassen sich zu einem gesamten Streubild zusammensetzen. Die effektive Streubreite S ergibt sich aus den einzelnen, nebeneinander angeordneten sich überlappenden einzelnen Streufächern 164. Durch Unterberechen der Düngemittelzufuhr zu den einzelenen Schleuderscheiben läßt sich die effektive Streubreite S beliebig zusammensetzen.

Die Fig. 12 zeigt eine andere Anordnung der Schleuderscheiben 165 und 166. Die inneren Schleuderscheiben 165 sind im gleichen Abstand zur Maschinenmitte angeordnet und befinden sich teilweise unter den etwas höher angeordneten äußeren Schleuderscheiben 166. Die einzelnen Schleuderscheiben 165 und 166 werden in der jeweils eingezeichneten Pfeilrichtung angetrieben und erzeugen jeweils die einzelnen Streufächer 167 in dargestellter Weise, die zusammengesetzt das Gesamtstreubild ergeben.

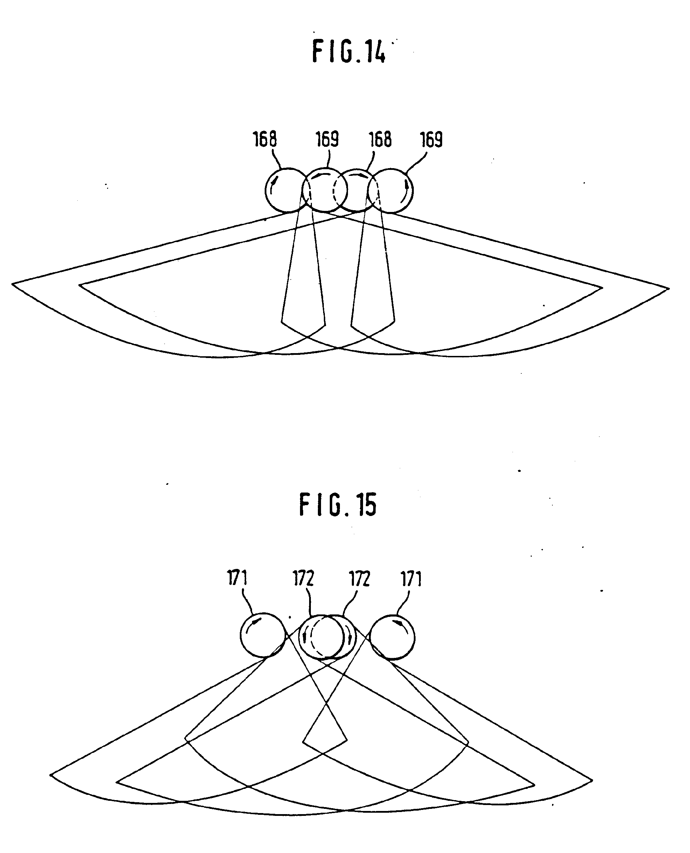

Die Fig. 13 zeigt eine weitere Möglichkeit der Anordnung der Schleuderscheiben 168 und 169. Hierbei sind die etwas tiefer angeordneten Schleuderscheiben 168 derart angeordnet, daß sie sich teilweise unterhalb den etwas höher angeordneten Schleuderscheiben 169 befinden. Die einzelnen Schleuderscheiben werden in der jeweils eingezeichneten Pfeilrichtung angetrieben und erzeugen die einzelnen Streufächer 170 die zu dem über die gesamte Streubreite reichenden Streufächer zusammengesetzt werden.

Die Fig. 14 zeigt eine Anordnung der Schleuderscheiben, die der Anordnung der Schleuderscheiben gemäß Fig. 13 entspricht. Der einzigste Unterschied gegenüber den Schleuderscheiben gemäß Fig. 13 besteht in der Antriebsrichtung der einzelnen Schleuderscheiben. Die einzelnen Schleuderscheiben werden in Richtung der eingezeichneten Pfeilrichtung angetrieben. Eine Änderung der Antriebsrichtung der jeweiligen Schleuderscheiben führt zu einer Veränderung der von den einzelnen Schleuderscheiben erzeugten Streufächer, wodurch sich die Art und Weise der Überlappung der einzelnen nebeneinander angeordneten Streufächer ebenfalls verändert. Die Fig. 15 zeigt eine weiter Möglichkeit zur Anordnung von Schleuderscheiben unterhalb des Vorratsbehälters eines Schleuderstreuers. Hierbei sind die einzelnen Schleuderscheiben 171,172 wieder in unterschiedlichen Höhen angeordnet, wobei sich die mittleren Schleuderscheiben 172 untereinander befinden und beispielsweise die einzelnen, eingezeichneten Streufächer erzeugen, die sich zu dem Gesamtstreubild zusammensetzen lassen. Der Antrieb der einzelnen Schleuderscheiben 171, 172 erfolgt in der jeweils eingezeichneten Pfeilrichtung.

## Patentansprüche

1. Schleuderstreuer (1,31) mit Vorratsbehälter (6,33), in dessen unterem Bereich Dosierorgane (10,36,84) angeordnet sind, die in einstellbaren Mengen das sich im Vorratsbehälter (6,33) befindliche Material mit Wurfelementen ausgerüsteten rotierend angetriebenen Schleuderscheiben (16,37,85) zuführen, dadurch gekennzeichnet, daß die Einstellorgane (9) der Dosierorgane (10,36,84) mit einer elektronischen Einstellvorrichtung (11,12,24,28,40,92,98,131,134) verbunden sind, die einen die momentane Ausbringmenge charakteristischen Wert erfaßt und aufgrund dieses Wertes die Dosierorgane (10,36,84) automatisch entsprechend des vorgegebenen Sollwertes einstellt, und daß die Schleuderscheiben (16,37,85) mit voneinander unterschiedlichen Drehzahlen antreibbar sind, wobei für jede Schleuderscheibe (16,37,85) ein unterschiedliche Drehzahlen ermöglichendes Getriebe (38,83,144,151,156) angeordnet ist.

2. Schleuderstreuer (1,31) nach Anspruch 1, dadurch gekennzeichnet, daß das Eingangsgetriebe zwei Anschlußwellen mit unterschiedlichen Übersetzungen aufweist.

3. Schleuderstreuer (1,31) nach Anspruch 1, dadurch gekennzeichnet, daß die jeder Schleuderscheibe (16,37,85) zugeführte Ausbringmenge gemeinsam oder unabhängig voneinander einstellbar ist.

## Claims

1. Centrifugal broadcaster (1, 31) including a hopper (6, 33), metering members (10, 36, 84) being disposed in the lower region of said hopper and supplying the material situated in the hopper (6, 33) in adjustable quantities to rotatably driven centrifugal discs (16, 37, 85), which are provided with throwing members, characterised in that the adjustment members (9) of the metering members (10, 36, 84) are connected to an electronic adjustment device (11, 12, 24, 28, 40, 92, 98, 131, 134), which receives a value characteristic for the instantaneous distribution quantity and automatically adjusts the metering members (10, 36, 84) on the basis of this value according to the prescribed desired value, and in that the centrifugal discs (16, 37, 85) are drivable at speeds which vary from one another, a transmission unit (38, 83, 144, 151, 156) being provided for each centrifugal disc (16, 37, 85) and permitting variable speeds.

2. Centrifugal broadcaster (1, 31) according to claim 1, characterised in that the single-gear transmission unit has two connection shafts with variable transmissions.

3. Centrifugal broadcaster (1, 31) according to claim 1, characterised in that the distribution quantity supplied to each centrifugal disc (16, 37, 85) is adjustable jointly with or independently of one another.

## Revendications

1. Epandeur centrifuge (1, 31) comportant un réservoir d'alimentation (6, 33) dont la zone inférieure comporte des organes de dosage (10, 36, 84) fournissant suivant des quantités réglables le produit contenu dans le réservoir (6, 33) à des disques d'épandage (16, 37, 85) entraînés en rotation, équipés d'éléments éjecteurs, épandeur caractérisé en ce que les organes de réglage (9) des organes de dosage (10, 36, 84) sont reliés à un dispositif de réglage électronique (11, 12, 24, 28, 40, 92, 98, 131, 134) détectant une valeur caractéristique de la quantité instantanée, distribuée, et à partir de cette valeur, on règle automatiquement ces organes de dosage (10, 36, 84) en fonction de la valeur de consigne prédéterminée et les disques d'épandage (16, 37, 85) peuvent entraînés à des vitesses de rotation différentes, et une transmission (38, 83, 144, 151, 156) permettant des vitesses de rotation différentes étant prévue pour chacun des disques d'épandage (16, 37, 85).

2. Epandeur centrifuge (1, 31) selon la revendication 1, caractérisé en ce que la transmission d'entrée de deux arbres de raccordement comporte deux moyens de démultiplication différents.

3. Epandeur centrifuge (1, 31) selon la revendication 1, caractérisé en ce que la quantité à distribuer, fournie à chaque disque d'épandage (16, 37, 85) est réglable en commun ou séparément.
